# EUROPÄISCHE PATENTSCHRIFT

(11) **EP 0 337 363 B1**
(45) Veröffentlichungstag und Bekanntmachung des Hinweises auf die Patenterteilung: **22.06.1994**
(21) Anmeldenummer: 89106343.0
(22) Anmeldetag: 11.04.1989
(51) Int. Cl.: G09B 21/00

(54) **Anzeigefläche für taktile Informationen**
Display panel for tactile informations
Panneau d'affichage pour information tactile

(30) Priorität: 11.04.1988 DE 3812028
(43) Veröffentlichungstag der Anmeldung: 18.10.1989
(73) Patentinhaber: Nützel, Wolfgang, D-85283 Wolnzach (DE)
(72) Erfinder: Nützel, Wolfgang, D-85283 Wolnzach (DE)
(74) Vertreter: Twelmeier, Ulrich, Dipl.Phys.

(56) Entgegenhaltungen:
- EP-A- 0 161 401
- DE-A- 3 602 355
- FR-A- 2 570 211
- US-A- 3 987 438
- US-A- 4 715 743

## Beschreibung

Die Erfindung betrifft eine Anzeigefläche zur Darstellung tastbarer Informationen gemäss dem Oberbegriff des Patentanspruchs 1 sowie ein Verfahren zum Betrieb der Anzeigefläche (Ansprüche 19 und 20).

Zur Darstellung tastbarer Informationen für Blinde dient hauptsächlich die Braille-Punktschrift. Ihre Zeichen bestehen aus allen mit einer 2x3 bzw. 2x4 Matrix darstellbaren Mustern tastbarer Punkte. Es lassen sich durch Aneinanderreihung der Zeichen zu Zeilen beliebige Texte darstellen. Mit einer Anzeigefläche, die mehrere Braillezeilen umfaßt, ist es auch möglich, graphische Informationen darzustellen. Das dabei übliche Rastermaß beträgt ca. 2,5 mm.

Es sind Anzeigeflächen bekannt, bei denen rasterförmig angeordnete Tastpunkte selektiv elektromagnetisch in die Abtastposition verschoben und in ihrer Endlage verriegelt werden.

In der EP-A-0 161 401 ist ein solches Flächendisplay beschrieben, bei dem die durch Öffnungen in einer Abtastfläche ragenden Kalotten von Tastkugeln als Tastpunkte dienen. Zum selektiven Setzen ist jeder Tastkugel eine federbelastete Verriegelungskugel zugeordnet, die durch einen von der Unterseite eingreifenden Stellanker gegen den Federdruck unter die Tastkugel geschoben wird. Zum Löschen eines Tastpunktes wird der jeweilige Stellanker zurückgezogen, so dass sich die Verriegelungskugel in die Ausgangslage bewegen und die Tastkugel freigeben kann. Zur Betätigung der Stellanker dienen zu einer Gruppe zusammengefaßte Magnetisierungswicklungen, die auf einer exzentrisch angetriebenen und auf Schienen verschiebbar gelagerten Hubvorrichtung auf der Unterseite des Anzeigefeldes angebracht sind.

Nachteilig ist hierbei, dass für jeden Tastpunkt ein gesonderter, kompliziert geformter Stellanker erforderlich ist, was zu erheblichen Kosten für ein mehrzeiliges Anzeigedisplay führt. Darüberhinaus stellt die Verschiebe- und Kubmechanik für Auswahl und Betätigung der Stellanker einen kostspieligen und störanfälligen mechanischen Aufwand dar. Wegen der konstruktionsbedingten Bauhöhe ist ein ermüdungsfreies Arbeiten über einen längeren Zeitraum nur möglich, wenn das Anzeigedisplay in die Arbeitsplatte versenkt eingebaut wird, was eine Benützung an unterschiedlichen Einsatzorten erschwert. Ein weiterer Nachteil entsteht durch die Verengung der Austrittskanäle an der Abtastfläche, die notwendig ist, um die Tastkugeln unverlierbar zu machen. An den dort vorhandenen Hinterschneidungen sammelt sich das an den Fingerkuppen stets haftende und beim Abtasten sich abstreifende Fett, sowie sonstige Fremdkörper. Die Tastkugeln können diese Ablagerungen nicht an die Oberfläche schieben, wodurch ihre leichte Beweglichkeit verloren geht. Da die Tastkugeln lediglich entriegelt und nicht zwangsweise in ihre Versenkposition geführt werden, führt diese Einschränkung der Beweglichkeit rasch zu Fehlfunktionen. Im Gegensatz zur Schwarzschrift haben die Zeichen der Brailleschrift keine Redundanz, weshalb die möglichen Fehlfunktionen vor allem im Bereich der Zahlendarstellung einen erheblichen Nachteil bedeuten.

Aufgabe der Erfindung ist es, eine Anzeigefläche der eingangs genannten Art so zu gestalten, dass sie in ihrem Aufbau einfach und dadurch billig herzustellen ist, und so zuverlässig arbeitet, dass sie auch an Arbeitsplätzen eingesetzt werden kann, wo die sichere Erkennung von Zahlen vorausgesetzt wird, wobei sie eine so geringe Bautiefe aufweist, dass ein längeres ermüdungsfreies Arbeiten auch ohne Einbau in die Arbeitsplatte möglich ist. Darüberhinaus soll ihr Betrieb auch in senkrechter Lage möglich sein, um sie als Hinweis- und Orientierungstafel mit abrufbarem Inhalt zur Wandmontage einsetzen zu können.

Erfindungsgemäss wird diese Aufgabe durch die Merkmale des Patentanspruchs 1 gelöst. Bevorzugte Weiterbildungen sind den Unteransprüchen zu entnehmen.
Die Erfindung wird nachstehend an Hand der Zeichnungen näher erläutert. In Ihnen zeigen:
- Figur 1: einen Ausschnitt aus einer Rasterspalte in räumlicher Darstellung,
- Figur 2: einen Schnitt parallel zu einem Zeilenschieber in Verriegelposition,
- Figur 3: einen Schnitt parallel zu einem Zeilenschieber in Verstellposition,
- Figur 4: einen Schnitt senkrecht zu den Zeilenschiebern in der Ebene eines Spaltenschiebers,
- Figur 5: einen Schnitt senkrecht zu den Zeilenschiebern in der Ebene eines Spaltenschiebers,
- Figur 6: eine Tastfläche mit Antrieb und Steuerung,
- Figur 7: eine Phasenbeziehung der Nockenwellen in Verriegelposition der Zeilenschieber,
- Figur 8: eine Phasenbeziehung der Nockenwellen in Verstellposition der Zeilenschieber,
- Figur 9: einen Schnitt durch eine Verschiebeeinrichtung,
- Figur 10: eine Multiplex-Ansteuerschaltung für die Verschiebeeinrichtungen,
- Figur 11: eine verschiebbare Stelleinrichtung mit Nocke,
- Figur 12: eine verschiebbare Stelleinrichtung für zwei Verschieberichtungen,
- Figur 13: eine verschiebbare Stelleinrichtung mit passiver Betätigung durch Feder, und
- Figur 14: eine Verschiebeeinrichtung an Spalten- und Zeilenschiebern.

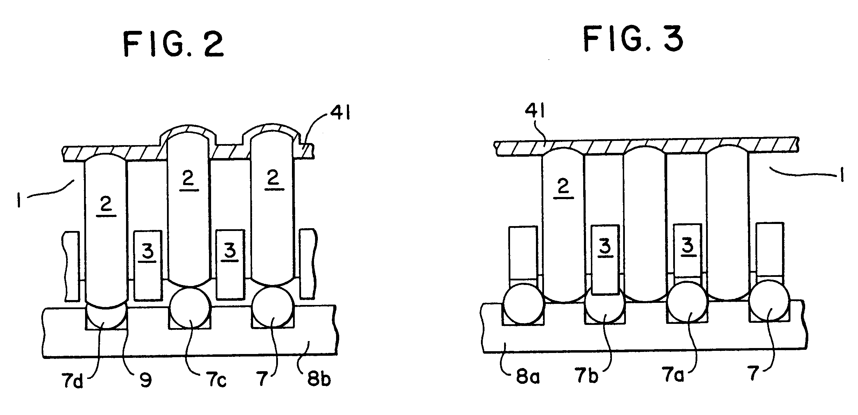

Die Anzeigefläche besteht aus einer Trägerplatte 1, die rasterförmig verteilt Bohrungen zur Aufnahme der als Tastelemente 2 dienenden Zylinderstifte aufweist (Fig. 2, Fig. 3). Auf der Unterseite der Trägerplatte 1 sind in den Zwischenräumen der Tastelementspalten Nuten zur verschiebbaren Lagerung der streifenförmigen Spaltenschieber 3 vorgesehen. Die Nutenform und der Schieberquerschnitt sind vorteilhafterweise so gewählt, dass die Schieber 3 in ihrer Position parallel zur Plattendicke fixiert sind.

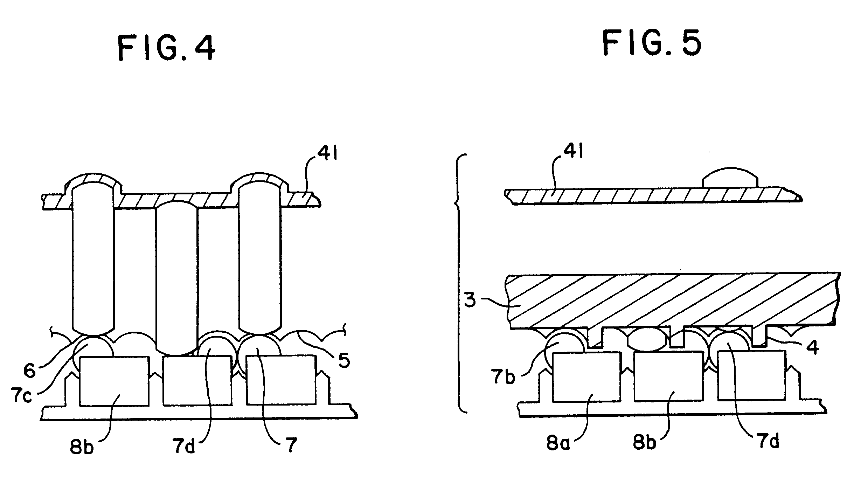

Die Spaltenschieber 3 weisen auf ihrer freiliegenden Kante stegförmige Verdickungen 4 zum Erfassen der Hubkörper 7 auf (Fig. 5), deren Höhe vorzugsweise etwa der halben Hubkörperhöhe und deren Abstand vorzugsweise etwa der doppelten Hubkörperbreite entspricht.

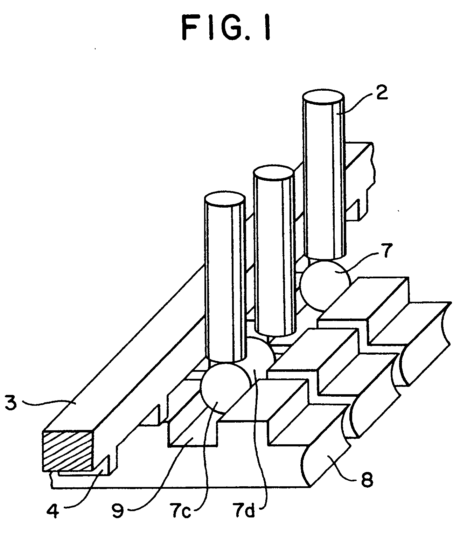

Parallel zum Verlauf der Rasterzeilen weist die Plattenunterseite Führungsrillen 5 entlang der Linien der Rasterbohrungen sowie der Rasterbohrungszwischenräume auf, die zur Fixierung der Lage der Hubkörper 7 in jeder der zwei möglichen Verriegelungspositionen 7c, 7d (Fig. 1, Fig, 2, Fig. 4) dienen. Als Hubkörper 7 dienen vorzugsweise Kugeln, wobei jedoch viele andere Formen wie Keile oder Scheiben verwendet werden können. Der Querschnitt der Führungsrillen 5 entspricht dem oberen Teil des Querschnitts des Hubkörpers 7. Jedem Tastelement 2 ist ein Hubkörper 7 zugeordnet, wobei alle Hubkörper 7 je einer Rasterzeile auf einem Zeilenschieber 8 in nutenförmigen Vertiefungen 9 verschiebbar so gelagert sind, dass sie selektiv in der Ebene 7b der Rasterzeilen oder in der Ebene 7a der Rasterzeilenzwischenräume positioniert werden können. Durch die Verschiebung jedes Zeilenschiebers 8 können alle Hubkörper 7 jeweils einer Rasterzeile gemeinsam in die Ebene der Rasterspalten, dargestellt in Fig. 2, oder der Rasterspaltenzwischenräume, dargestellt in Fig. 3, verschoben werden.

Jeder Hubkörper 7 kann also vier verschiedene Positionen 7a bis 7d einnehmen, deren Funktionen an Hand der Fig. 2 bis 5 beschrieben werden.

In der als Verstellposition 8a in Fig. 3 und Fig. 5 des Zeilenschiebers 8 bezeichneten Position befindet sich der Hubkörper 7 im Rasterspaltenzwischenraum im Eingriff des Spaltenschiebers 3 und kann von diesem zur Vorbereitung des Hebens eines Tastelements 2 in die Ebene 7b der Rasterzeile, bzw. zur Verhinderung des Anhebens in die Ebene 7a des Rasterzeilenzwischenraums verschoben werden.

In der als Verriegelposition 8b in Fig. 2 und Fig. 4 bezeichneten Stellung des Zeilenschiebers 8 befindet sich der Hubkörper 7 entweder unter dem zugeordneten Tastelement 2 und hebt ihn an (7c), oder im Zwischenraum neben dem zugeordneten Tastelement 2, ohne ihn zu heben (7d).

Die beiden Hubkörperpositionen 7c und 7d in der Verriegelposition 8b sind durch die Führungsrillen 5 stabilisiert, d.h., ein Positionswechsel ist nur über die Verstellposition 8a möglich.

Die Änderung des Informationsinhaltes der Anzeige erfolgt jeweils gleichzeitig für alle Tastelemente 2 einer Rasterzeile, wobei mehrere Rasterzeilen mit gleichem Inhalt gemeinsam verstellt werden können, und zwar in folgenden vier Schritten:
- Im ersten Schritt werden alle Spaltenschieber 3 in ihre Mittelstellung gebracht.
- Im zweiten Schritt wird der Rasterzeileninhalt dadurch gelöscht, dass der entsprechende Zeilenschieber 8 in die Verstellposition 8a verschoben wird (Fig. 3 und Fig. 5).
- Im dritten Schritt werden die Hubkörper 7 mit Hilfe der Spaltenschieber 3 positioniert, und
- im vierten Schritt werden durch Verschieben des Zeilenschiebers 8 in die Verriegelungsposition 8b je nach Voreinstellung der Hubkörper 7 die Tastelemente durch Unterschieben der Hubkörper 7 angehoben bzw. in der Versenkposition belassen (Fig. 2, Fig. 4 und Fig 5).

Die Rückstellung der Tastelemente 2 in die Versenkposition kann durch Schwerkraft und die abtastend lesenden Finger erfolgen oder durch ein Federelement 18, das die Tastelemente 2 gleichzeitig unverlierbar macht.

In vorteilhafter Weise wird dieses Federelement 18 durch eine die Abtastoberfläche darstellende Gummischicht 41 gebildet, wodurch gleichzeitig die zu Störungen führende Ablagerung von Verunreinigungen zwischen Tastelement 2 und Trägerplatte 1 verhindert wird. Ein Optimum an Festigkeit, Rückstellkraft und Tasteindruck läßt sich dadurch erzielen, dass diese Gummischicht 41 über den Tastelementen 2 dünner ist als in den Tastelementzwischenräumen.

Die Zeit, die benötigt wird, um eine neue Information auf der erfindungsgemässen Anzeigefläche darzustellen, kann dadurch verkürzt werden, daß die Schritte Eins und Zwei des Verstellvorgangs für alle neu zu beschreibenden Rasterzeilen gemeinsam ausgeführt werden.

Je nach Anforderung bezüglich Geschwindigkeit und Art des Neubeschreibens der Anzeigefläche, sowie der Kosten für die Antriebseinheit für Zeilenschieber 8 und Spaltenschieber 3 und deren Ansteuerung, kommt vorzugsweise eine der folgenden Betriebsarten zur Anwendung:
a) Gemeinsames Löschen frei wählbarer Rasterzeilen mit anschließendem zeilenweisem Neubeschreiben.
b) Gemeinsames Löschen von Rasterzeilen in festgelegten Gruppen, bzw. aller Rasterzeilen und nachfolgendes zeilenweises Neubeschreiben.
c) Löschen einer bzw. mehrerer frei wählbarer Rasterzeilen und sofortiges Neubeschreiben aller gelöschten Zeilen mit identischem Inhalt.
d) Löschen jeweils einer Rasterzeile in festgelegter Reihenfolge und sofortiges Neubeschreiben.

Zusammenstellung einiger Eigenschaften der verschiedenen Betriebsarten:

| Betriebsart | a) | b) | c) | d) |
|---|---|---|---|---|
| Aufwand für Ansteuerung | hoch | gering | mittel | gering |
| wahlfreier Zugriff auf beliebige Rasterzeile | ja | nein | ja | nein |
| Geschwindigkeit zum teil-weisen Neubeschreiben | maximal | mittel | hoch | niedrig |
| Beeinflussung der Rastan-zeige während des teilweisen Neubeschreibens | nein | ja | nein | ja |

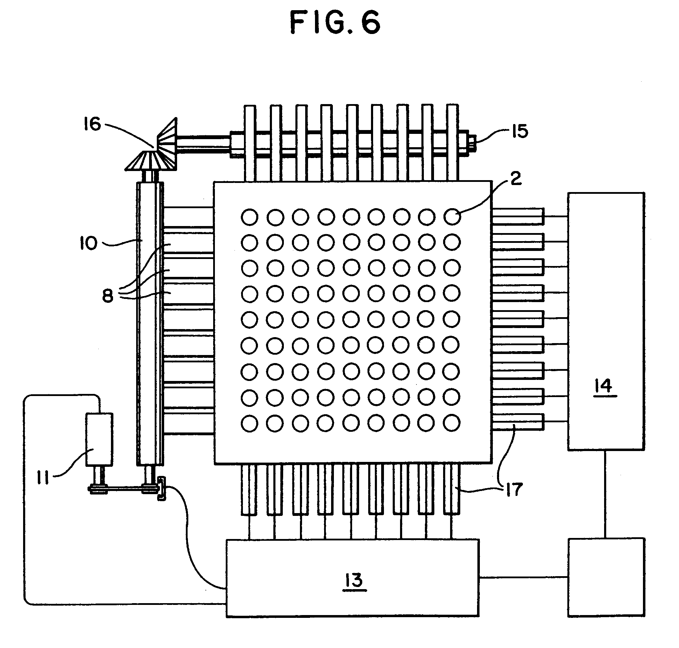

Der Verschiebeweg der Zeilenschieber 8 beträgt etwa die Hälfte des Rasterspaltenabstandes, der der Spaltenschieber 3 ist kleiner als der Rasterzeilenabstand. Zu ihrem Antrieb kommen die im folgenden beschriebenen Vorrichtungen in Betracht, deren Auswahl sich nach der angestrebten Betriebsart richtet. An Hand der Fig. 6 soll ein für die Betriebsart c) geeigneter, besonders einfacher Antrieb beschrieben werden.

Der relativ hohe Kraftbedarf, der beim Verschieben der Zeilenschieber 8 in die Verriegelposition 7c, 7d benötigt wird, wenn viele Tastelemente 2 einer oder mehrerer Rasterzeilen angehoben werden sollen, vor allem, wenn sie durch die abtastenden Finger belastet werden, wird von der Nockenwelle 10 aufgebracht, die von dem Elektromotor 11 angetrieben wird. Ein Impulsgeber 12 meldet die Winkelstellung der Nockenwelle 10 an die 1. und 2. Steuereinrichtungen 13 und 14. Eine zweite Nockenwelle 15 ist über ein Getriebe 16 phasenstarr an die Drehung der Nockenwelle 10 gekoppelt. Sie dient dazu, alle Spaltenschieber 3 gemeinsam in die Mittelstellung zu bringen.

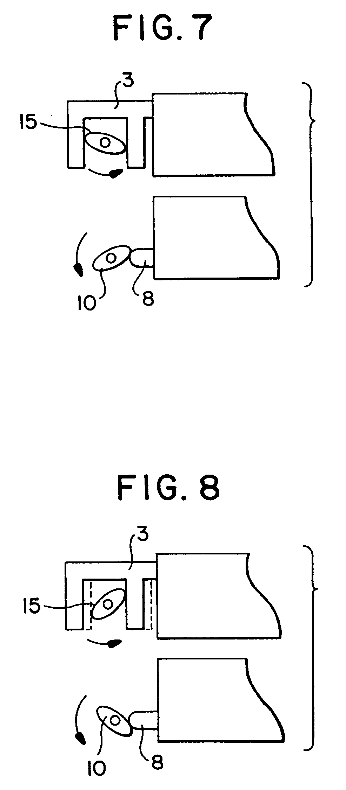

Die Querschnitte der beiden Nockenwellen 10, 15 und ihre gegenseitige Phasenlage sind so gewählt, dass die Spaltenschieber 3 immer dann in ihre Mittelstellung gebracht werden, wenn die Zeilenschieber 8 von der Nockenwelle 10 freigegeben werden, um in die Verstellposition 8a verschoben werden zu können (Fig. 7), und dass die Fixierung der Spaltenschieber 3 in der Mittelstellung gelöst wird, bevor die Nockenwelle 10 die Zeilenschieber 8 wieder in die Verriegelposition 8b verschiebt (Fig. 8).

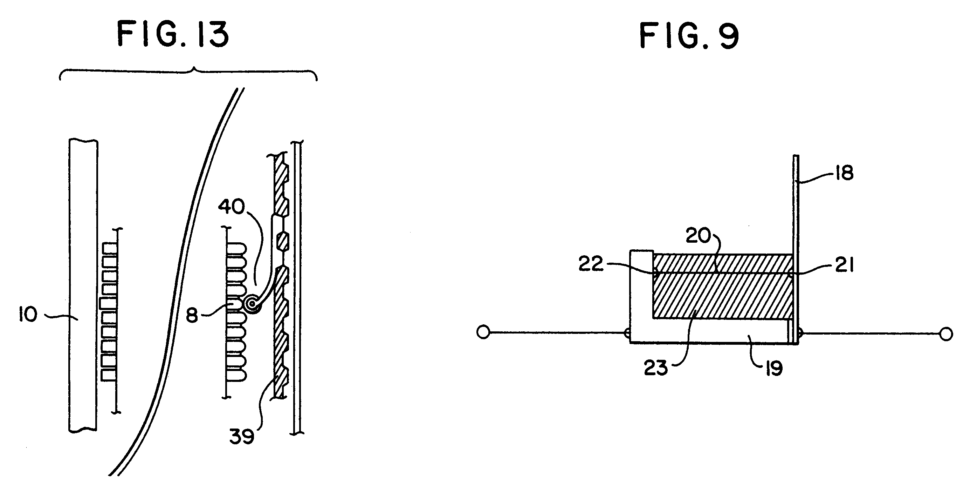

Zum wahlfreien, selektiven Verschieben der Zeilen- und Spaltenschieber 8, 3 dient eine, jedem Schieber 8, 3 zugeordnete Verschiebeeinrichtung 17, deren Wirkungsweise an Hand der Fig. 9 beschrieben wird.

Ein streifenförmiges Federelement 18 ist an einer Seite eines metallischen Trägerprofils 19 elektrisch isoliert befestigt. Der Draht 20 ist im 1. Befestigungspunkt 21 mechanisch fest und elektrisch leitend mit dem Federelement 18 verbunden. Sein anderes Ende ist an der gegenüberliegenden Seite des Profils 19 im 2. Befestigungspunkt 22 elektrisch leitend befestigt.

Der Draht 20 besteht aus einer als "Shape Memory Alloy" bekannten Legierung aus vorzugsweise Nickel und Titan.

Er zeigt bei Erwärmung über eine durch die Zusammensetzung der Legierung in weiten Grenzen variierbare Schwellentemperatur eine reversible Längenabnahme von typisch bis zu 5 % der Gesamtlänge. Die dabei nutzbare Zugkraft beträgt typisch etwa 200 N/qmm.

Die Erwärmung des Drahtes 20 über die Schwellentemperatur erfolgt durch Wärmewirkung eines über das Trägerprofil 19 und das Federelement 18 zugeführten und den Draht 20 durchfließenden elektrischen Stroms.

Die Drahtstärke wird nun so gewählt, dass bei ausreichender Zugkraft die thermische Trägheit der angestrebten Geschwindigkeit für das Neubeschreiben der erfindungsgemässen Anzeigefläche entspricht, die im wesentlichen von der Abkühlzeit unter die Schwellentemperatur bestimmt wird. Sie kann dadurch erheblich verringert werden, dass der Draht 20 in gut wärmeleitendes Material eingebettet wird. Diesem Zweck dient die Füllmasse 23, die z.B. aus Silikongummi bestehen kann und die Wärme über die Oberfläche des Profils 19 abführt.

Die Drahtlänge wird entsprechend der benötigten Verkürzung ausgewählt.

Eine weitere Möglichkeit, die Drahtabmessungen an die benötigte Verschiebekraft und den Verschiebeweg anzupassen, besteht in der Anwendung einer mechanischen Übersetzung, deren Größe in der beschriebenen Ausführungsform durch die Lage des 1. Befestigungspunktes 21 des Drahtes 20 auf dem Federelement 18 bestimmt wird.

Die elektrischen Impulse zur Ansteuerung der Verschiebeeinrichtungen 17 werden einer an sich bekannten elektronischen 1. und 2. Steuereinrichtung 13 und 14 entnommen. Um den Aufwand gering zu halten, erfolgt die Ansteuerung vorteilhafterweise im Multiplexverfahren, was wegen der thermischen Trägheit der Drähte 20 leicht möglich ist und durch geeignete Wahl der Füllmasse 23 noch vorteilhaft beeinflußt werden kann.

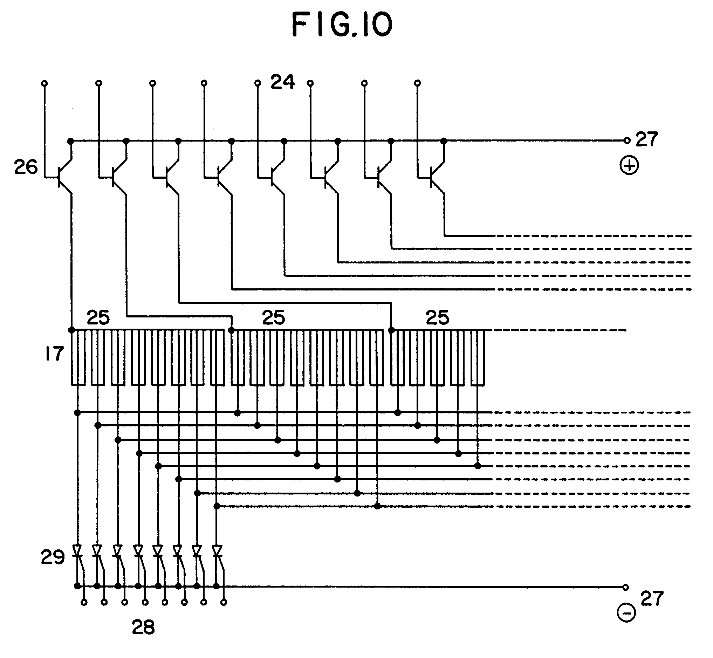

Die Verschiebeeinrichtungen 17 sind beispielsweise zu 8 Gruppen 25 in Fig. 10 mit jeweils 8 Einrichtungen 17 zusammengefaßt. Über die Steuereingänge 24 wird nacheinander jeweils eine Gruppe 25 ausgewählt und durch den zugeordneten Transistor 26 an den Versorgungsspannungsanschluß 27 gelegt. Über die Steuereingänge 28 werden dann jeweils die Thyristoren 29 gezündet, deren zugehöriger Verschiebeelemente 17 aktiviert werden sollen. Bevor über einen der Steuereingänge 24 auf die nächste Gruppe 25 umgeschaltet wird, sorgt eine kurze Impulspause dafür, dass alle Thyristoren 29 löschen.

Gemäss Figur 6 wird durch das Steuersignal des Winkelgebers 12 die Drehbewegung der Nockenwellen 10 und 15 mit den Steuereinrichtungen 13 und 14 der Verschiebeelemente 17 synchronisiert.

Um den elektrischen Ansteueraufwand zu reduzieren, wird für Anzeigeflächen mit geringeren Anforderungen bezüglich Geschwindigkeit des Neubeschreibens bzw. Beeinträchtigung des Lesens während des Neubeschreibens, was vor allem für die Betriebsart b) und d) zutrifft, vorteilhafterweise eine verschiebbare Stelleinrichtung zur Verschiebung eines Schiebers 3, 8 oder einer Gruppe von Schiebern 3,8 vorgesehen (Fig. 11-13).

Um den wahlfreien Zugriff auf die Zeilenschieber 8 zu ermöglichen, bzw. zur Betätigung der Spaltenschieber 3 verfügt die Stelleinrichtung über einen aktiven, vorzugsweise elektrisch steuerbaren Antrieb. Es wird jedoch auch eine besonders einfache Ausführungsform vorgeschlagen, bei der für den Antrieb der Stelleinrichtung ein passiv wirkendes Federelement vorgesehen ist, und die vor allem dann angewendet wird, wenn auf die Rasterzeilen in festgelegter Reihenfolge zugegriffen werden soll.

Die Verschiebung der Stelleinrichtung erfolgt über einen eigenen Antrieb, vorzugsweise einen Schrittmotor, oder über ein Getriebe durch den bereits vorhandenen Antrieb der Nockenwellen 10,15. Eine an sich bekannte elektronische Steuerung synchronisiert gegebenenfalls die Bewegungen der Stelleinrichtung unter Einbeziehung der Signale des die Winkelstellung der Nockenwellen erfassenden Impulsgebers 12.

An Hand der Figuren 11 bis 13 werden drei vorteilhafte Ausführungsformen beschrieben.

In Fig. 11 besteht die Stelleinrichtung aus einer Nocke 30, die auf einem Zahnriemen 31 angebracht quer zu den Schiebern 8 vorgeschoben werden kann. Zur Verstellung eines ausgewählten Schiebers 8' bewegt die elektromagnetisch angetriebene Bewegungseinrichtung 32 die Nocke 30 gegen den Schieber 8' und verschiebt ihn.

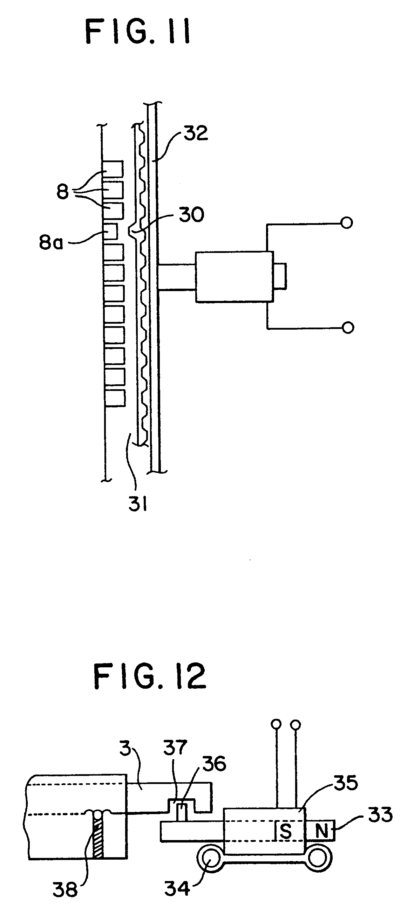

In Fig. 12 greift der permanentmagnetische Anker 33 eines auf einer Spindel 34 verschiebbar angeordneten Elektromagneten 35 mit seinem Mitnehmer 36 in die Nuten 37 der sich in Mittelstellung befindenden Schieber 3, wodurch eine Verstellung des zugeordneten Schiebers 3 in eine der zwei Endlagen möglich ist. Das jedem Schieber 3 zugeordnete Grenzkraftgesperre 38 fixiert die drei möglichen Schieberpositionen.

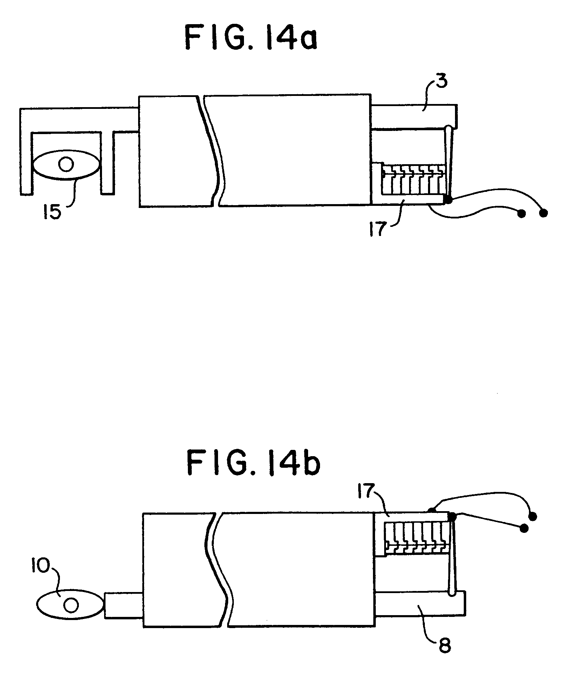

In Fig. 13 ist eine besonders einfache Ausführungsform dargestellt. Die an einem umlaufenden Riemen 39 federnd gehalterte Rolle 40 verschiebt den ihr jeweils zugeordneten Schieber 8, wenn dieser durch die ihn in Gegenrichtung verschiebende Nockenwelle 10 freigegeben ist.

Abschließend sei darauf hingewiesen, dass die beschriebenen Antriebsvorrichtungen zur Betätigung der Spaltenschieber 3 sowie der Zeilenschieber 8 auch in anderen, nicht explizit dargestellten Kombinationen mit Vorteil verwendet werden können, und dass ebenfalls jedem Schieber 3, 8 ein direkter Antrieb zugeordnet werden kann, wie er etwa als Elektromagnet, Pneumatik- oder Hydraulikantrieb oder Ähnlichem dem Stand der Technik entspricht.

## Patentansprüche

1. Anzeigefläche zur Darstellung tastbarer Information durch rasterförmig angeordnete Tastelemente, die durch Unterschieben von Hubkörpern selektiv in den Raum über der Anzeigefläche verschoben werden können, **dadurch gekennzeichnet**, das zum Unterschieben der Hubkörper (7) unter die Tastelemente (2) eine der Anzahl der Tastelementzeilen entsprechende Anzahl von Zeilenschiebern (8) und eine der Anzahl der Tastelementspalten entsprechende Anzahl von Spaltenschiebern (3) vorgesehen ist, wobei auf der Oberseite der Zeilenschieber (8) jedem Hubkörper (7) eine nutenförmige Vertiefung (9) zugeordnet ist, die ihn in Zeilenrichtung fixiert, in Spaltenrichtung jedoch verschiebbar lagert, sowie auf der Untersetie der Spaltenschieber (3) jedem Hubkörper (7) eine stegförmige Verdickung (4) zugeordnet ist, die seine Verschiebung in Spaltenrichtung bewirkt.

2. Anzeigefläche nach Anspruch 1, **dadurch gekennzeichnet**, daß eine die Tastelemente (2) bedeckende Gummischicht (41) die Rückstellung der Tastelemente (2) in die Versenkposition bewirkt und sie unverlierbar macht.

3. Anzeigefläche nach Anspruch 2, **dadurch gekennzeichnet**, daß die Gummischicht (41) über den Tastelementen (2) dünner ist als in den Tastelementzwischenräumen.

4. Anzeigeffäche nach Anspruch 1, **dadurch gekennzeichnet**, daß Bewegungseinrichtungen (10,15) für die Zeilenschieber (8) und die Spaltenschieber (3) vorgesehen sind, die als Nockenwellen ausgebildet sind, deren Bewegung über ein schlupffreies Getriebe (16) phasenstarr gekoppelt ist.

5. Anzeigefläche nach Anspruch 4, **dadurch gekennzeichnet**, daß als Antrieb (11) der Bewegungseinrichtungen (10, 15) ein Elektromotor vorgesehen ist.

6. Anzeigefläche nach Anspruch 4 oder 5, **dadurch gekennzeichnet**, daß ein Impulsgeber (12) die Position der ersten Bewegungseinrichtung (10) signalisiert.

7. Anzeigefläche nach einem der Ansprüche 1 bis 6, **dadurch gekennzeichnet**, daß zur selektiven Verschiebung der Spaltenschieber (3) und/oder der Zeilenschieber (8) eine bei der Erwärmung eines Drahtes (20) aus einer als "Shape Memory Alloy" bezeichneten Legierung auftretende reversible Formänderung oder Längenänderung vorgesehen ist.

8. Anzeigefläche nach Anspruch 7, **dadurch gekennzeichnet**, daß zur Erwärmung des Drahtes (20) ein den Draht (20) durchfließender elektrischer Strom vorgesehen ist.

9. Anzeigefläche nach Anspruch 7 oder 8, **dadurch gekennzeichnet**, daß der Draht (20) zur Erhöhung der Arbeitsgeschwindigkeit in eine Füllmasse (23) eingebettet ist.

10. Anzeigefläche nach einem der Ansprüche 7 bis 9, **dadurch gekennzeichnet**, daß das Ausmaß der durch den Draht (20) hervorgerufenen Bewegung durch eine einfache mechanische Übersetzung, vorzugsweise in der Form eines Hebels, vergrößert wird.

11. Anzeigefläche nach Anspruch 10, **dadurch gegekennzeichnet**, daß der Hebel als Federelement (18) ausgebildet ist.

12. Anzeigefläche nach einem der Ansprüche 7 bis 11, **dadurch gekennzeichnet**, daß zur elektrischen Ansteuerung aller Drähte (20) ein Multiplexverfahren vorgesehen ist.

13. Anzeigefläche nach einem der Ansprüche 1 bis 6, **dadurch gekennzeichnet**, daß zur selektiven Verschiebung der Spaltenschieber (3) und/oder Zeilenschieber (8) ein quer zu den Schiebern (3,8) verschiebbarer Mitnehmer(30,36)vorgesehen ist, wobei der Mitnehmer (30, 36) die Bewegung einer den Schiebern (3, 8) zugeordneten Bewegungseinrichtung (32, 33) selektiv auf jeweils einen Schieber (3, 8) überträgt.

14. Anzeigefläche nach Anspruch 13, **dadurch gekennzeichnet**, daß mindestens ein Mitnehmer (30, 36) als Nocke auf einem umlaufenden Zahnriemen (31) ausgebildet ist.

15. Anzeigefläche nach Anspruch 13, **dadurch gekennzeichnet**, daß zur selektiven Verschiebung der Spaltenschieber (3) und/oder Zeilenschieber (8) eine quer zu den Schiebern (3, 8) verschiebbare Verstelleinrichtung (35) vorgesehen ist, wobei die Verstelleinrichtung (35) mit ihrem Mitnehmer (36) nacheinander jeweils in ein dazu passendes, auf jedem Schieber (3, 8) angeordnetes Gegenstück (37) greift und eine Verstell bewegung auf je einen Schieber (3, 8) überträgt.

16. Anzeigefläche nach einem der Ansprüche 1 bis 6, **dadurch gekennzeichnet**, daß zur selektiven Verschiebung der Zeilenschieber (8) eine quer zu den Zeilenschiebern (8) verschiebbare, federnd gehaltene Rolle (40) über einen Antrieb so positioniert ist, daß sich die Federkraft in der Phase, in der die Fixierung der Zeilenschieber (8) in der Verriegelungsposition aufgehoben ist, genau auf einen zugeordneten Schieber (8) überträgt.

17. Anzeigefläche nach einem der Ansprüche 13 bis 16, **dadurch gekennzeichnet**, daß als Antrieb der verschiebbaren Verstelleinrichtung (31, 35, 39) quer zu den Schiebern (3, 8) ein Schrittmotor vorgesehen ist.

18. Anzeigefläche nach einem der Ansprüche 13 bis 16, **dadurch gekennzeichnet**, daß der Antrieb der verschiebbaren Verstelleinrichtung (31, 35, 39) quer zu den Schiebern (3, 8) mit dem Antrieb der Bewegungseinrichtungen (10, 15) der Spaltenschieber (3) oder Zeilenschieber (8) über ein schlupffreies Getriebe (16) phasenstarr gekoppelt ist.

19. Verfahren zum Betrieb der Anzeigefläche nach Anspruch 1, **dadurch gekennzeichnet**, daß die Position der Tastelemente (2) je einer Rasterzeile dadurch gesteuert wird, daß alle Hubkörper (7) dieser Rasterzeile in einem ersten Schritt durch Verschiebung des sie tragenden Zeilenschiebers (8) parallel zur Rasterzeile so positioniert werden, daß sie in Eingriff mit den in den Rasterspaltenzwischenräumen verschiebbar gelagerten und sich in einer Mittelstellung befindenden Spaltenschieber (3) gelangen, daß in einem zweiten Schritt jeder Hubkörper (7) durch Verschiebung des zugeordneten Spaltenschiebers (3) in eine von zwei möglichen Positionen (7a, 7b) auf dem Zeilenschieber (8) positioniert wird, und daß in einem dritten Schritt durch Verschiebung des Zeilenschiebers (8) die Hubkörper (7) je nach ihrer Position entweder in den Raum unter das Tastelement (2) verschoben werden und dieses anheben (7c), oder in den Raum neben das Tastelement (2), ohne es zu heben (7d).

20. Verfahren nach Anspruch 19, **dadurch gekennzeichnet**, daß die Bewegung der Spaltenschieber (3) und der Zeilenschieber (8) durch gekoppelte Bewegungseinrichtungen (10,15) derart erfolgt, daß einer Verschiebung mindestens eines Zeilenschiebers (8) in die Verstellposition (8a) eine Verschiebung aller Spaltenschieber (3) in die Mittelstellung vorausgeht, sowie einer Verschiebung mindestens eines Zeilenschiebers (8) in die Verriegelungsposition (8b) die wahlweise Verschiebung der Spaltenschieber (3) in eine der beiden Endlagen vorausgeht.

## Claims

1. A display surface for presenting information in tactile form by means of a grid-shaped array of tactile elements which can be selectively caused to project into the space above the display surface by using lifting elements,characterized in that in order to move the lifting elements (7) under the tactile elements (2) there are a number of line slides (8) corresponding to the number of lines of tactile elements (2), and a number of column slides (3) corresponding to the number of columns of tactile elements on the upper surface of the line slides (8), a recess (9) shaped like a groove being allocated to each lifting element (7) in such a way that the lifting element (7) is fixed in the direction of the respective line although it is movable in the direction of the column, and similarly on the lower surface of the column slides (3) a protrusion (4) shaped like a rib is associated with each lifting element (7) to shift the latter in the direction of the column.

2. A display surface according to claim 1, characterized in that a rubber membrane (44) covering the tactile elements (2) causes the tactile elements (2) to return to their recessed position and prevents them from being lost.

3. A display surface according to claim 2, characterized in that the rubber membrane (41) over the tactile elements (2) is thinner than in the interspaces between the tactile elements (2).

4. A display surface according to claim 1, characterized in that a camshaft is provided for the actuating devices (10, 15) of the line slides (8) and for those of the column slides (3), and the movement of these camshafts is phase-locked via a non-slip drive (16).

5. A display surface according to claim 4, characterized in that the drive (11) for the actuating devices (10, 15) is provided by an electric motor.

6. A display surface according to claim 4 or 5, characterized in that pulse generator (12) indicates the position of the first actuating device (10).

7. A display surface according to any of claims 1 to 6, characterized in that a selective displacement of the line slides (8) and/or column slides (3) is accomplished by the reversible change in shape or length occurring when a wire (20) made from an alloy known as a "shape memory alloy" is heated up.

8. A display surface according to claim 7, characterized in that the heating of the wire (20) is caused by an electric current flowing through the wire (20).

9. A display surface according to claim 7 or 8, characterized in that in order to increase the speed of operation, the wire (20) is embedded in a filling material (23).

10. A display surface according to any of claims 7 to 9, characterized in that the extent of movement generated by the wire (20) is magnified by a simple mechanical transmission, preferably in the form of a lever.

11. A display surface according to claim 10, characterized in that the lever is a spring element (18).

12. A display surface according to any of claims 7 to 11, characterized in that all the wires (20) are electrically energized by a multiplex process.

13. A display surface according to any of claims 1 to 6, characterized in that a selective displacement of the line slides (8) and/or column slides (3) is accomplished in such a manner that by moving a coupling element (30, 36) transversely to the slides (3, 8) the movement of an actuating device (32, 33) allocated to the slides (3, 8) is transmitted selectively to in each case one slide (3, 8).

14. A display surface according to claim 13, characterized in that at least one coupling element (30, 36) is Provided in form of on a recirculating toothed belt (31).

15. A display surface according to claim 13, characterized in that the selective movement of the column slides (3) and/or line slides (8) is accomplished by a setting device (35) which is transversely displaceable relative to the slides (3, 8), and this setting device (35) engages successively with its coupling element (36) in a corresponding counterpart (37) provided on each slide (3, 8), and transmits a setting movement to in each case one slide (3, 8).

16. A display surface according to any of claims 1 to 6, characterized in that a selective displacement of the line slides (8) is accomplished in that a spring-loaded roller (40), which is transversely movable in relation to the line slides (8), is positioned via a drive in such a way that the spring force is transmitted exactly to an associated line slide (8) during the phase when the line slides (8) are no longer fixed in the locked position.

17. A display surface according to any of claims 13 to 16, characterized in that the drive of the slidable displacement device (31, 35, 39) transverse to the slides (3, 8) is provided by a stepping motor.

18. A display surface according to any of claims 13 to 16, characterized in that the drive of the slidable displacement device (31, 35, 39) transverse to the slides (3, 8) is coupled in a phase-locked manner with the drive of the actuating devices (10, 15) of the column slides (3) or line slides (8) via a non-slip gearing (16).

19. A method of operating a display surface according to claim 1, characterized in that the position of the tactile elements (2) in each grid line is controlled by, in a first step, shifting the line slide (8) carrying the lifting elements (7) in a direction parallel to the grid line so that all the lifting elements (7) in this grid line are positioned in such a way that they are engaged by the column slide (3), which is movably located in the interspaces between the grid columns, while this slide (3) is in its middle position; in a second step, each lifting element (7) is positioned in one of two possible positions (7a, 7b) on the line slide (8), by moving the associated column slide (3); and in a third step, the line slide (8) is moved and, depending on their position, the lifting elements (7) are either moved into the space below the tactile element (2), thereby raising it (7c),or they move into the space alongside the tactile element (2) without raising it (7d).

20. A method according to claim 19, characterized in that the movement of the column slides (3) and of the line slides (8) is achieved by coupled actuating devices (10, 15) in such a manner that the displacement of at least one line slide (8) into the setting position (8a) is preceded by the shifting of all the column slides (3) into the middle position, and also the shifting of at least one line slide (8) into the locked position (8b) is preceded by the shifting of the column slides (3) as desired into one of the two end positions.

## Revendications

1. Panneau indicateur destiné à la présentation d'informations tactiles par l'intermédiaire d'une matrice d'éléments tactiles qui peuvent être soulevés de façon sélective, à la surface du panneau indicateur, grâce à des pièces de levage caractérisé en ce qu'il est muni pour le soulèvement des pièces de levage (7), sous les éléments tactiles (2), d'un nombre de coulisseaux en ligne (8) correspondant au nombre de lignes d'éléments tactiles (2) et d'un nombre de coulisseaux en colonne (3) correspondant au nombre de colonnes d'éléments tactiles (2), une gorge (9) en forme de rainure étant affectée à chaque pièce de levage (7) sur la surface supérieure des coulisseaux en ligne (8) de manière à bloquer la translation de ladite pièce de levage (7) dans la direction des lignes tout en lui conservant sa mobilité en colonne verticale alors qu'une sur-épaisseur (4), en forme de nervure, est affectée à chaque pièce de levage (7) sur la surface inférieure des coulisseaux en colonne (3) de manière à assurer le déplacement en colonne de ladite pièce de levage (7).

2. Panneau indicateur selon la revendication 1 caractérisé en ce qu'une couche de caoutchouc (41) recouvrant les éléments tactiles (2) assure le rappel des éléments tactiles (2) en position enfoncée et les rend imperdables.

3. Panneau indicateur selon la revendication 2 caractérisé en ce que la couche de caoutchouc (41) est plus mince au-dessus des éléments tactiles (2) qu'au-dessus des interstices entre lesdits éléments tactiles (2).

4. Panneau indicateur selon la revendication 1 caractérisé en ce qu'il est muni de mécanismes de déplacement (10, 15) des coulisseaux en ligne 8 et des coulisseaux en colonne (3) constitués par des arbres à cames couplés par l'intermédiaire d'une transmission sans glissement (16) qui assure leur mise en phase.

5. Panneau indicateur selon la revendication 4 caractérisé en ce que l'organe d'entraînement (11) des mécanismes de déplacement (10, 15) est constitué par un moteur électrique.

6. Panneau indicateur selon la revendication 4 ou 5 caractérisé en ce qu'un contacteur (12) repère la position du premier mécanisme de déplacement (10).

7. Panneau indicateur selon une quelconque des revendications 1 à 6 caractérisé en ce que le déplacement sélectif des coulisseaux en colonne (3) et ou des coulisseaux en ligne (8) est réalisé grâce au changement de forme ou de longueur réversible, provoqué par échauffement, d'un fil (20) constitué d'un alliage du type alliage à mémoire de forme.

8. Panneau indicateur selon la revendication 7 caractérisé en ce que l'échauffement du fil (20) est obtenu par le passage d'un courant électrique à travers ledit fil (20).

9. Panneau indicateur selon la revendication 7 ou 8 caractérisé en ce que le fil (20) est enrobé dans une matière isolante (23) afin d'augmenter la vitesse de travail.

10. Panneau indicateur selon une des revendications 7 à 9 caractérisé en ce que l'ampleur du déplacement engendré par le fil (20) est augmentée par l'intermédiaire d'une démultiplication mécanique simple, par exemple, sous forme d'un levier.

11. Panneau indicateur selon la revendication 10 caractérisé en ce que le levier est constitué d'un élément de ressort (18).

12. Panneau indicateur selon une quelconque des revendications 7 à 11 caractérisé en ce que l'alimentation électrique de tous les fils (20) est réalisée par un procédé de multiplexage.

13. Panneau indicateur selon une quelconque des revendications 1 à 6 caractérisé en ce que le déplacement sélectif des coulisseaux en colonne (3) et/ou des coulisseaux en ligne (8) est réalisé par un tenon d'entraînement (30, 36) transversal, ajustable, prévu sur les coulisseaux (3, 8), ledit tenon d'entraînement (30, 36) transmettant le mouvement d'un des mécanismes de déplacement (32, 33) associés aux coulisseaux (3, 8) respectivement et de façon sélective à un coulisseau (3, 8).

14. Panneau indicateur selon la revendication 13 caractérisé en ce qu'au moins un tenon d'entraînement (30, 36) est constitué par une came disposée sur une courroie crantée rotative (31).

15. Panneau indicateur selon la revendication 13 caractérisé en ce qu'il comporte un dispositif de réglage (35) coulissant transversalement aux coulisseaux (3, 8) permettant le déplacement sélectif des coulisseaux en colonne (3) et/ou des coulisseaux en ligne (8), ledit dispositif de réglage (35) engrènant par son tenon d'entraînement (36), successivement la forme complémentaire (37) correspondante prévue sur chacun des coulisseaux (3, 8) et transmettant un mouvement de réglage aux coulisseaux (3, 8) respectifs.

16. Panneau indicateur selon une quelconque des revendications 1 à 6 caractérisé en ce qu'un rouleau (40) monté élastique, coulissant transversalement par rapport aux coulisseaux en ligne (8), destiné au déplacement sélectif des coulisseaux en ligne (8) est positionné sur un dispositif d'entraînement de sorte que précisément au moment où intervient le déblocage des coulisseaux en ligne (8) hors de leur position verrouillée, la force du ressort s'exerce sur un coulisseau (8) correspondant.

17. Panneau indicateur selon une quelconque des revendications 13 à 16 caractérisé en ce que le mécanisme d'entraînement des dispositifs de réglage (31, 35, 39) coulissant transversalement aux coulisseaux (3, 8) est constitué par un moteur pas à pas.

18. Panneau indicateur selon une quelconque des revendications 13 à 16 caractérisé en ce que le mécanisme d'entraînement des dispositifs de réglage (31, 35, 39) coulissant transversalement aux coulisseaux (3, 8) est en phase avec le mécanisme d'entraînement des mécanismes de déplacement (10, 15) des coulisseaux en colonne (3) ou des coulisseaux en ligne (8) par l'intermédiaire d'une transmission sans glissement (16).

19. Procédé pour le fonctionnement d'un tableau indicateur selon la revendication 1 caractérisé en ce que le positionnement des éléments tactiles (2) d'une trame horizontale est réalisé de façon telle que les pièces de levage (7) de cette matrice horizontale sont, dans un premier temps, positionnées par le déplacement du coulisseau en ligne (8) soutenant lesdites pièces de levage (7) parallèlement à la trame horizontale de façon à ce que lesdites pièces de levage (7) s'engrènent avec les coulisseaux en colonne (3) logés coulissant dans les interstices des trames verticales et se trouvant en position intermédiaire, dans un deuxième temps, chaque pièce de levage (7) est positionnée dans l'une des deux positions possibles (7a,7b) sur le coulisseau horizontal (8) par le déplacement du coulisseau en colonne (3) associé et, dans un troisième temps, les pièces de levage (7) sont déplacées selon leurs positions, par l'intermédiaire du déplacement du coulisseau horizontal (8), soit dans l'espace sous l'élément tactile (2) qui se trouve ainsi soulevé (7c), soit dans l'espace à côté de l'élément tactile (2) qui n'est alors pas soulevé (7d).

20. Procédé selon la revendication 19 caractérisé en ce que les déplacements des coulisseaux en colonne (3) et des coulisseaux en ligne (8) sont réalisés par l'intermédiaire des mécanismes de déplacement (10, 15) couplés, de façon à ce que le déplacement d'au moins un coulisseau horizontal (8) dans la position de transition (8a) soit précédé par un déplacement de tous les coulisseaux en colonne (3) dans la position intermédiaire et, de même, qu'un déplacement d'au moins un coulisseau en ligne (8) dans la position de verrouillage (8b) soit précédé de façon facultative du déplacement des coulisseaux en colonne (3) dans une des deux positions extrêmes.
